# EUROPÄISCHE PATENTSCHRIFT

(11) **EP 0 285 704 B1**
(45) Veröffentlichungstag und Bekanntmachung des Hinweises auf die Patenterteilung: **03.11.1993**
(21) Anmeldenummer: 87118285.3
(22) Anmeldetag: 10.12.1987
(51) Int. Cl.: B23B 31/02

(54) **Mehrteiliges Spannsystem, insbesondere für rundlaufende Werkzeuge**
Clamping system of several parts in particular for concentric running tools
Système de serrage composé de plusieurs parties en particulier pour outils tournant rond

(30) Priorität: 08.04.1987 DE 3711808
(43) Veröffentlichungstag der Anmeldung: 12.10.1988
(73) Patentinhaber: WALTER Aktiengesellschaft, D-72010 Tübingen (DE)
(72) Erfinder: Vollmer, Rolf, D-7400 Tübingen (DE)
(74) Vertreter: Rüger, Rudolf, Dr.-Ing.

(56) Entgegenhaltungen:
- EP-A- 0 123 156
- EP-A- 0 189 697
- EP-A- 0 204 671
- EP-A- 0 219 594
- EP-A- 0 281 760
- DE-A- 2 606 215
- US-A- 4 575 293
- US-A- 4 729 702

## Beschreibung

Die Erfindung betrifft ein mehrteiliges Spannsystem, insbesondere für rundlaufende Werkzeuge, mit einem gegebenenfalls einen Spannschaft tragenden Aufnahmekörper, der an einer Stirnseite eine rechtwinklig zu der Drehachse verlaufende Anlagefläche und eine koaxiale Paßbohrung aufweist, sowie mit einem vorzugsweise als Werkzeugträger ausgebildeten Anschlußteil, das auf einer Stirnseite ebenfalls mit einer rechtwinklig zu der Drehachse verlaufenden Anlagefläche und mit einem koaxialen, in die Paßbohrung passenden Paßzanfen ausgebildet ist, durch den das Anschlußteil bezüglich des Aufnahmekörpers zentrierbar ist, mit einem dem Paßzapfen zugeordneten, zur Drehachse koaxialen Spannzapfen, der in einen sich an die Paßbohrung anschließenden Hohlraum des Aufnahmekörpers ragt sowie mit von der Außenseite des Aufnahmekörpers her betätigbaren Spannmitteln zur gegenseitigen Verspannung des Anschlußteiles und des Aufnahmekörpers, die wenigstens zwei in der den Hohlraum umschließenden Wandung des Aufnahmekörpers radial beweglich gelagerte Spannelemente aufweisen, welche einander gegenüberliegend angeordnet sind und in einer Spannstellung schräg zu der Drehachse verlaufende Keilflächenbereiche des Spannzapfens untergreifende Spannflächen tragen und mit ihnen gemeinsamen Betätigungsmitteln gekuppelt sind, durch die sie zwischen einer unwirksamen Lösestellung und der Spannstellung verstellbar sind.

Bei einem aus der DE-A- 33 14 591 bekannten Spannsystem sind die als Aufnahmebohrung bezeichnete Paßbohrung und der als Zentrierzapfen wirkende Paßzapfen kegelig ausgebildet. Die Anordnung ist dabei derart getroffen, daß der Innenkegel der Paßbohrung einen um einen vorbestimmten kleinen Winkelwert größeren Kegelwinkel als der Außenkegel des Paßzapfens aufweist, wobei durch entsprechende Ausbildung des Paßzapfens und/oder des Aufnahmekörpers bei der Längsverschiebung der Konuslücke zwischen den beiden Kegeln wenigstens einer dieser beiden Kegel bis zur großflächigen Anlage der beiden Kegel aneinander elastisch verformbar ist. Bei diesem Spannsystem ist auch beim Auftreten großer seitlich auf das Anschlußteil wirkender Kräfte eine hohe Rundlaufgenauigkeit gewährleistet, ohne daß dazu übertriebene Anforderungen an die Herstellungsgenauigkeit gestellt oder Schwierigkeiten beim Anfügen des Anschlußteiles an den Aufnahmekörper in Kauf genommen werden müßten. Die das Anschlußteil mit dem Aufnahmekörper verspannenden Spannmittel bestehen aus einer koaxialen Spannschraube, die durch eine entsprechende Längsbohrung des Aufnahmekörpers verlaufend auf einer Schulter des Aufnahmekörpers axial abgestützt und in eine zugeordnete koaxiale Gewindebohrung in dem Paßzapfen des Anschlußteiles eingeschraubt ist.

Diese zentrale Spannschraube ist nur von der Rückseite des Aufnahmekörpers her zugänglich, was insbesondere dann gelegentlich umständlich ist, wenn der Aufnahmekörper mittels eines Spannschaftes in eine Werkzeugspindel eingesetzt ist. Beim Werkzeugwechsel muß dann zunächst der Aufnahmekörper von der Spindel abgenommen werden, um die Spannschraube zugänglich zu machen und das das Werkzeug tragende Anschlußteil lösen zu können. Praktisch bedeutet dies, daß mehrere Elemente - von hinten her - auseinandergenommen werden müssen. Auch wenn der Aufnahmekörper unmittelbar durch die hohle Werkzeugspindel gebildet ist, können sich Probleme hinsichtlich der einfachen Betätigung der zentralen Spannschraube durch eine automatische Werkzeugwechselvorrichtung ergeben.

Grundsätzlich Gleiches gilt auch für im Prinzip ähnliche Spannsysteme, die mit einem zylindrischen Paßzapfen des Anschlußteiles ausgeführt sind und von denen eines beispielhaft in der DE-A- 32 37 128 beschrieben ist.

Eine Betätigung der Spannmittel von der Seite des Aufnahmekörpers her erlaubt ein Spannsystem für Bohrstangen, wie es aus der DE-A-2 234 389 bekannt ist. Dabei ist der mit einem kurzen Außenkonus kombinierte zylindrische Paßzapfen in seiner zylindrischen Paßbohrung durch eine einzige radiale Druckschraube arretiert, die über ein kegeliges Endteil gleichzeitig eine Axialkomponente der Spannkraft erzeugt. Die prinzipbedingte große Radialkomponente der Spannkraft kann die Rundlaufgenauigkeit beeinträchtigen.

Günstigere Spannverhältnisse bei gleichzeitiger Möglichkeit der Betätigung der Spannmittel von der Seite des Aufnahmekörpers her zu erzielen, erlaubt demgegenüber ein Spannsystem, das in der EP-0 204 671-A2 beschrieben ist. Bei diesem Spannsystem ist mit dem zylindrischen Paßzapfen des Anschlußteiles ein koaxialer Spannzapfen verschraubt, der an seinem in dem zugeordneten Hohlraum des Aufnahmekörpers liegenden Teil zwei einander gegenüberliegende parallele Planflächen trägt, in die eine im Profil sägezahnförmige Verzahnung eingearbeitet ist. Die in Gestalt von Schiebern ausgebildeten, in entsprechenden Führungsbuchsen in der Wandung des Aufnahmekörpers radial verschieblich gelagerten Spannelemente sind ihrerseits an den dem Spannzapfen zugewandten Stirnseiten entsprechend verzahnt, wobei die Anordnung derart getroffen ist, daß bei in der Spannstellung stehenden Spannelementen zumindest zwei in Achsrichtung aufeinanderfolgend angeordnete Keilflächen der Verzahnung des Spannzapfens mit entsprechenden, im axialen Abstand angeordneten schrägen Spannflächen der Verzahnung der Spannelemente in Eingriff stehen. Die Betätigungsmittel zur Verstellung der beiden diametral einander gegenüberliegenden Schieber sind durch eine von der Seite des Aufnahmekörpers mittels eines Innensechskants betätigbare Spannschraube gebildet, die durch eine entsprechende Durchgangsbohrung des Spannzapfens im Bereiche der Verzahnung verläuft. Diese Spannschraube kann auch als Summenschraube ausgebildet sein, deren rechts- und linksgängige Gewindeteile in zugeordnete Gewindebohrungen der Schieber eingeschraubt sind.

Da die Klemmschraube den Spannzapfen durchguert, muß sie bei der Abnahme des Anschlußteiles von dem Aufnahmekörper, d.h. bei einem Werkzeugwechsel, ganz herausgenommen werden, was umständlich und auch deshalb unerwünscht ist, weil dabei lose Teile anfallen; oder aber es muß der Spannzapfen geschlitzt sein, was der Stabilität abträglich ist. Auch stellt es sehr hohe Anforderungen an die Herstellungsgenauigkeit, wenn sichergestellt werden muß, daß bei in Eingriff miteinander stehenden Verzahnungen mehrere axial im Abstand hintereinander liegende Zähne oder Zahnflächen gleichmäßig tragen. Schon verhältnismäßig kleine Herstellungsungenauigkeiten führen dazu, daß die Kraftübertragung an örtlich begrenzten Flächenteilen erfolgt, die dann entsprechend überlastet werden. Um zu vermeiden, daß entweder die Verzahnungen nicht ordnungsgemäß miteinander in Eingriff kommen oder die das Anschlußteil drehfest mit dem Aufnahmekörper kuppelnden Mitnehmer verklemmt werden, muß deshalb in der Praxis der Spannzapfen eine gewisse Drehbeweglichkeit gegenüber dem Paßzapfen aufweisen, die bspw. dadurch erreicht wird, daß der Spannzapfen auf den Paßzapfen aufgeschraubt ist. Damit scheidet zum einen eine einstückige Ausbildung des Spannzapfens an dem Paßzapfen aus, die für manche Anwendungszwecke erwünscht wäre, während zum anderen bereits eine kleine Verdrehung des Spannzapfens bezüglich des Paßzapfens beim Spannvorgang wegen des Gewindes zu einer nicht zu vernachlässigenden Axialbewegung des Spannzapfens führt, die undefiniert ist und ebenfalls eine ungleichmäßige Aufteilung der zu übertragenden Zugkraft auf die axial hintereinander liegenden Zahnflächen der miteinander in Eingriff kommenden Verzahnungen hervorruft.

Auf solche Zahnflächen verzichtet ein Spannsystem, das aus der EP 0026 751 bekannt ist und von dem die Erfindung ausgeht. Bei diesem Spannsystem trägt der zylindrische Paßzapfen des Anschlußteils einen stirnseitig aufgeschraubten koaxialen Spannzapfen, der eine ringsumlaufende Nut aufweist, die einseitig durch eine Kegelmantelfläche begrenzt ist, die mit der Drehachse einen spitzen Winkel einschließt und Keilflächenbereiche enthält, welche mit zugeordneten untergreifenden Spannflächen zweier einander gegenüberliegend in dem Aufnahmekörper beweglich gelagerter Spannelemente zusammenwirken. Die schieberartig ausgebildeten Spannelemente werden durch eine Summenschraube betätigt, welche von außen her betätigbar ist. Wenn bei der Betätigung der Summenschraube die beiden einander gegenüberliegenden Spannelemente exakt synchron aufeinander zu bewegt werden und dabei genau symmetrisch zu der Drehachse verbleiben, werden im Zusammenwirken mit der die Drehachse umgebenden glatten einzigen Kegelmantelfläche an dem Spannzapfen auf den Spannzapfen theoretisch keine einseitigen resultierenden radialen Spannkräfte ausgeübt. Das stellt aber sehr hohe Anforderungen an die Herstellungsgenauigkeit. Schon bei verhältnismäßig geringen Herstellungstoleranzen bspw. der Gewinde oder im Bereiche der Spannflächen der Spannelemente kann der Paßzapfen über den aufgesetzten Spannzapfen aus seiner zu der Drehachse koaxialen Stellung seitlich etwas herausgedrückt werden, mit dem Ergebnis, daß die Rundlaufgenauigkeit des eingespannten Werkzeugs beeinträchtigt wird.

Aufgabe der Erfindung ist es, ein mehrteiliges Spannsystem der eingangs genannten Art zu schaffen, das einerseits auch beim Auftreten großer,seitlich auf das Anschlußteil wirkender Kräfte eine hohe Rundlaufgenauigkeit behält und andererseits bei einfachem Aufbau eine exakte, von der durch die Mitnehmer vorgegebenen Winkelstellung des Anschlußteiles unabhängige axiale Verspannung des Anschlußteiles gegen den Aufnahmekörper mit großer axialer Spannkraft gewährleistet.

Zur Lösung dieser Aufgabe ist das Spannsystem erfindungsgemäß dadurch gekennzeichnet, daß der Paßzapfen und die Paßbohrung kegelig ausgebildet sind und daß der in den Hohlraum ragende Spannzapfen in dem Aufnahmekörper in einem unterhalb der Kegelmantelfläche liegenden Abschnitt zur Aufnahme etwaiger radialer Spannkraftkomponenten seitlich geführt ist.

Durch diese seitliche Führung des Spannzapfens in dem Aufnahmekörper ist eine ungünstige Beeinflussung des Paßzapfens durch die an der Kegelmantelfläche des Spannzapfens angreifenden Spannkräfte auch dann ausgeschlossen, wenn, bedingt durch Herstellungstoleranzen, diese Spannkräfte eine resultierende Komponente rechtwinklig zur Drehachse aufweisen.

Da die axiale Spannung ausschließlich über die zu der Drehachse koaxiale Kegelmantelfläche des Spannzapfens erfolgt, ist unabhängig von der durch die Mitnehmer vorgegebenen Winkelstellung des Anschlußteiles bezüglich des Aufnahmekörpers immer eine exakte Verspannung über die gesamten tragenden Flächenbereiche gewährleistet. Der Spannzapfen kann nicht nur auf den Paßzapfen stirnseitig fest anliegend aufgeschraubt sein - wobei bei der axialen Verspannung kein Losdrehen des Spannzapfens in seinem Gewinde auftreten kann - sondern er kann auch an dem Paßzapfen stirnseitig einstückig angeformt sein. Alternativ kann in einer besonders einfachen Ausführungsform die Anordnung sogar derart getroffen sein, daß der Spannzapfen durch den Paßzapfen selbst gebildet ist, der eine von der Kegelmantelfläche einseitig begrenzte, rings umlaufende Nut aufweist.

Die an der Kegelmantelfläche des Spannzapfens angreifenden Spannelemente erlauben es, eine praktisch beliebig große axiale Spannkraft zu erzielen. Das Spannsystem ist in hervorragender Weise für NC-Werkzeugmaschinen mit automatischem Werkzeugwechsel geeignet. Bei einem solchen Werkzeugwechsel braucht lediglich das das Werkzeug tragende Anschlußteil abgenommen werden; eine Notwendigkeit zur Demontage weiterer Elemente, bspw. des Aufnahmekörpers von der Aufnahmespindel, entfällt.

Der auf den Paßzapfen aufgesetzte Spannzapfen kann in einer bevorzugten Ausführungsform als rotationssymmetrisches Drehteil pilzförmig ausgebildet sein.

Wenn er auf den Paßzapfen aufgeschraubt ist, kann der Aufnahmekörper auch eine koaxiale Bohrung zur Aufnahme einer zentralen Spannschraube aufweisen, womit die Möglichkeit eröffnet wird, in dem gleichen Aufnahmekörper wahlweise Anschlußteile mit dem Spannzapfen oder mit der bekannten koaxialen Gewindebohrung für die zentrale Spannschraube zu spannen. Umgekehrt kann bei entsprechender Wahl des Gewindes, mit dem der Spannzapfen auf den Paßzapfen aufgeschraubt ist, nach Abnahme des Spannzapfens das Anschlußteil in einem herkömmlichen Aufnahmekörper mittels der zentralen Spannschraube gespannt werden.

Die Spannelemente können mit Vorteil durch in entsprechenden Führungen der Wandung des Aufnahmekörpers radial verschieblich gelagerte Schieber gebildet sein, wobei es sich als günstig erwiesen hat, wenn jeder Schieber stirnseitig wenigstens eine die Spannfläche tragende vorspringende Spannase aufweist. Diese Spannase kann im Bereiche ihrer Stirnseite der Umrißgestalt des Spannzapfens entsprechend geformt sein, womit erreicht werden kann, daß sie die Kegelmantelfläche des Spannzapfens in einem Winkelbereich von praktisch bis fast 180° umschließt. Damit ergeben sich sehr günstige Verhältnisse hinsichtlich der Flächenpressung.

Zweckmäßig ist es, wenn die Betätigungsmittel, ähnlich wie aus der EP-0204 671 A2 bekannt, eine mit entsprechenden Gewindebohrungen der diametral einander gegenüberliegenden Schieber zusammenwirkende Summenschraube aufweisen, die von außen zugängliche Betätigungseinrichtungen trägt. Dabei ist aber in einer bevorzugten Ausführungsform die Anordnung nunmehr derart getroffen, daß die Summenschraube oberhalb des Spannzapfens verlaufend angeordnet ist, so daß der Spannzapfen selbst weder eine Bohrung noch einen Schlitz zur Aufnahme der Summenschraube aufweist und demgemäß auch keine die Stabilität beeinträchtigende Schwächung erfährt.

In der Zeichnung sind Ausführungsbeispiele des Gegenstandes der Erfindung dargestellt. Es zeigen:
- Fig. 1: ein Spannsystem gemäß der Erfindung, teilweise im axialen Schnitt, in einer Seitenansicht,
- Fig. 2: das Spannsystem nach Fig. 1, geschnitten längs der Linie II-II der Fig. 1, in einer Draufsicht,
- Fig. 3 bis 5: ein Spannelement des Spannsystems nach Fig.1, in einer stirnseitigen Seitenansicht, im axialen Schnitt, in einer Seitenansicht und in einer Draufsicht, und
- Fig. 6: ein Spannsystem gemäß der Erfindung, in einer abgewandelten Ausführungsform, in einer Schnittdarstellung entsprechend Fig. 1.

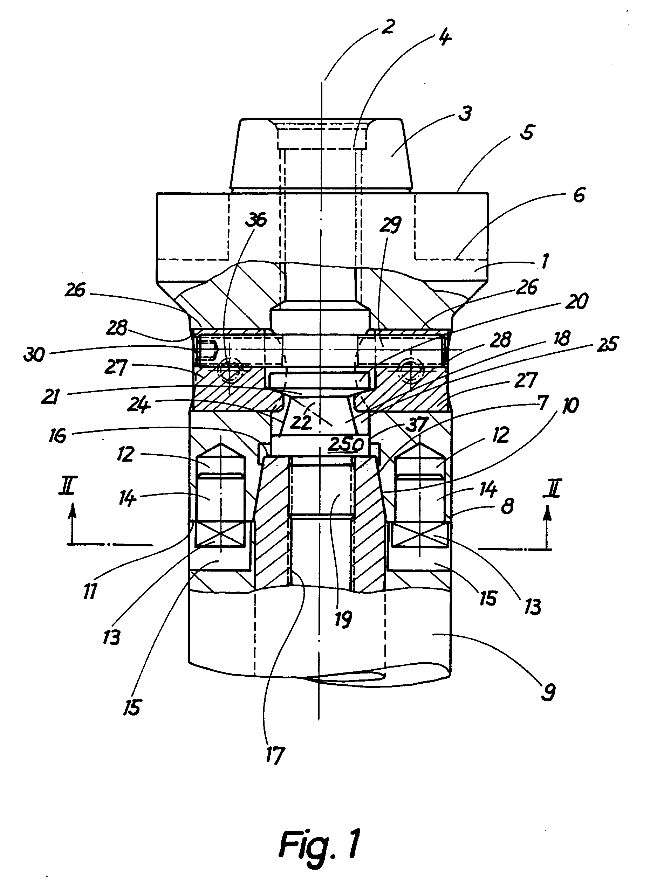

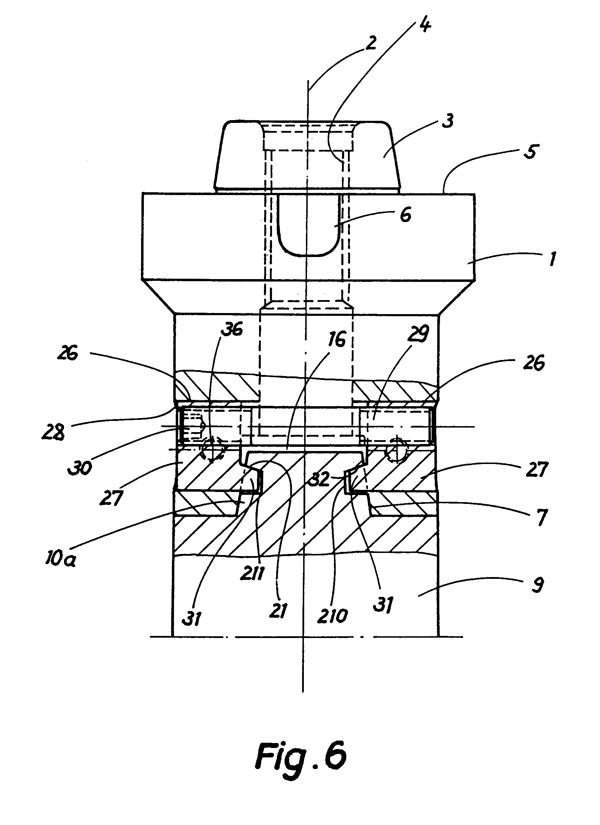

Das Spannsystem weist in beiden Ausführungsformen, nach Fig. 1 und 6, einen im wesentlichen zylindrischen, massiven Aufnahmekörper 1 mit einem zu der Drehachse 2 koaxialen NCT-Kegel 3 und einer koaxialen Gewindebohrung 4 auf, die von der Stirnseite des NCT-Kegels 3 her in den Aufnahmekörper 1 führt. Der NCT-Kegel 3, an den sich eine rechtwinklig zu der Drehachse 2 verlaufende Planfläche 5 anschließt, dient zur rundlaufgenauen Kupplung des Aufnahmekörpers 1 mit einer nicht weiter dargestellten Werkzeugspindel. Dieser zugeordnete Mitnehmer greifen in randoffene Ausnehmungen 6 des Werkzeugkörpers 1 ein; die axiale Verspannung kann über eine in die Gewindebohrung 3 eingeschraubte zentrale Spannschraube erfolgen.

Auf der der Planfläche 5 gegenüberliegenden Seite ist in dem Aufnahekörper 1 eine koaxiale kegelige Paßbohrung 7 ausgebildet, die von einer rechtwinklig zu der Drehachse 2 verlaufenden planen Anlagefläche 8 ausgeht.

Mit dem Aufnahmekörper 1 ist ein im wesentlichen zylindrisches Anschlußteil 9 verspannt, das ein nicht weiter dargestelltes rundlaufendes Werkzeug, bspw. einen Fräsmesserkopf, trägt. Das Anschlußteil 9 trägt stirnseitig einen koaxialen kegeligen Paßzapfen 10(Fig.1) oder 10a (Fig. 6), der von einer rechtwinklig zu der Drehachse 2 sich erstreckenden planen Anlagefläche 11 umgeben ist. Der Innenkegel der Paßbohrung 7 weist einen um einen vorbestimmten kleinen Winkelwert größeren Kegelwinkel als der Außenkegel des Paßzapfens 10,10a auf. Die Anordnung ist derart getroffen, daß bei der Längsverschiebung der Konuslücke zwischen den beiden Kegeln wenigstens einer dieser beiden Kegel bis zur großflächigen Anlage der beiden Kegel aneinander elastisch verformbar ist.

Im Bereiche der Anlagefläche 8 sind in entsprechende achsparallele zylindrische Bohrungen 12 des Aufnahmekörpers Mitnehmer 13 (Fig.1) mit einem zylindrischen Schaft 14 maßgenau eingepreßt, die in entsprechende randoffene Aussparungen 15 im Bereiche der Anlagefläche 11 des Anschlußteiles 9 eingreifen und eine drehfeste spielfreie Kupplung zwischen dem Anschlußteil 9 und dem Aufnahmekörper 1 herstellen. Diese Mitnehmer 13 sind in Fig.6 nicht weiter dargestellt.

Bei der Ausführungsform nach Fig. 1 weist das Anschlußteil 9 im Bereiche des Paßzapfens 10 eine von dessen planer Stirnfläche 16 ausgehende koaxiale Gewindebohrung 17 auf. Auf seine Stirnfläche 16 ist ein koaxialer pilzförmiger Spannzapfen 18 spielfrei aufgesetzt, der als rotationssymmetrisches Drehteil ausgebildet ist und einen koaxialen Gewindeansatz 19 trägt, welcher in die Gewindebohrung 17 eingeschraubt ist.

Alternativ könnte der Spannzapfen 18 auch einstückig an dem Paßzapfen 10 angeformt sein, womit der Gewindeansatz 19 entfällt.

Der pilzförmige Spannzapfen 18 weist anschließend an seine obere ebene Stirnfläche einen ersten zylindrischen Abschnitt 20 auf, der auf der der Stirnfläche gegenüberliegenden Seite durch eine ringsumlaufende, eine Keilfläche bildende koaxiale Kegelmantelfläche 21 begrenzt ist. Die Kegelmantelfläche 21 schließt mit der Drehachse 2 einen spitzen Winkel 22 ein; an sie schließt sich ein kegelstumpfförmiger koaxialer Abschnitt 24 an, auf den schließlich ein zweiter koaxialer zylindrischer Abschnitt 250 folgt, der mit seiner rechtwinklig zu der Drehachse 2 verlaufenden Stirnfläche stramm auf der Stirnfläche 16 des Paßzapfens 10 sitzt.

In dem Aufnahmekörper 1 der Ausführungsform nach Fig. 1 ist anschließend an die kegelige Paßbohrung 7 ein koaxialer, im wesentlichen zylindrischer Hohlraum 25 ausgebildet, der im zusammengesetzten Zustand den Spannzapfen 18 aufnimmt. In den Hohlraum 25 führen zwei zueinander koaxiale, in den den Hohlraum 25 umgebenden Wandungsteilen des Aufnahmekörpers 1 angeordnete zylindrische Führungsbohrungen 26, deren gemeinsame Achse rechtwinklig zu der Drechachse 2 verläuft und diese schneidet. In den beiden Führungsbohrungen 26 sind zwei Spannelemente in Gestalt zylindrischer Schieber 27 längsverschieblich gelagert, von denen jeder eine durchgehende Gewindebohrung 28 aufweist. In die beiden Gewindehohrungen ist eine Summenschraube 29 eingeschraubt, die den Hohlraum 25 in dem Bereich oberhalb des Spannzapfens 18 durchquert und an einem Ende eine Betätigungseinrichtung in Gestalt eines Innensechskants oder anderen Innenprofils 30 aufweist. Die Summenschraube 29 ist somit ersichtlich von außen, d.h. genauer von der Seite des Aufnahmekörpers 1 her betätigbar.

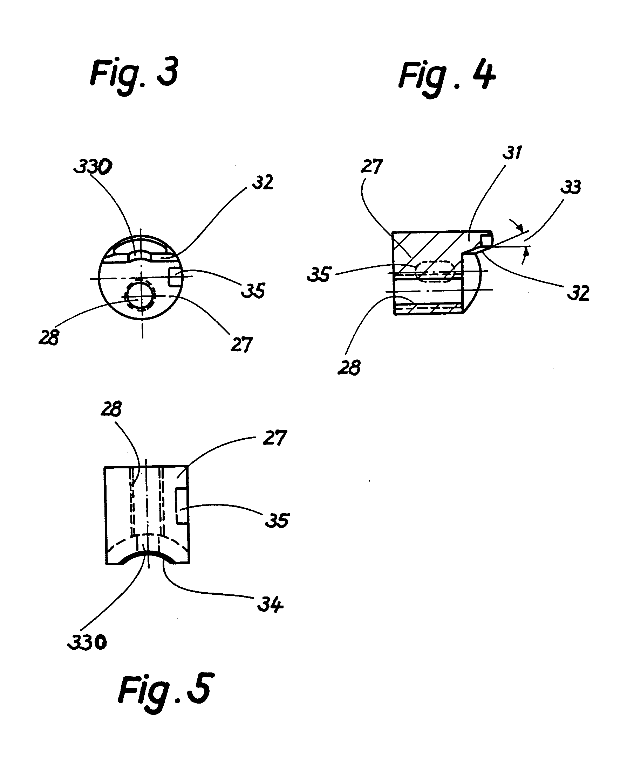

Wie insbesondere den Fig. 3 bis 5 zu entnehmen, ist jeder der Schieber 27 an seinem in den Hohlraum 25 ragenden Ende mit einer vorspringenden Spannase 31 ausgebildet, die auf ihrer in Fig.1 nach oben weisenden Seite eine im westentlichen kegelförmige Spannfläche 32 trägt. Die Spannfläche 32 schließt einen spitzen Winkel 33 von ca. 20° mit der Längsachse des Schiebers 27 ein. Sie ist durch eine nutenartige Vertiefung 330 unterbrochen, derart, daß sich beidseitig der nutenartigen Vertiefung 330 zwei gleichgestaltete Spannflächenbereiche ergeben. An ihrer dem Spannzapfen 18 zugewandten Stirnseite ist die Spannase 31 bei 34, dem Umriß des Spannzapfens 18 folgend, teilkreisförmig ausgespart, derart, daß sie den Spannzapfen 18 auf der Kegelmantelfläche 21 über einen Winkelbereich (Sektor) von fast 180° umgreift. In eine an dem Schieber 27 seitlich angebrachte Längsnut 35 greift jeweils eine Madenschraube 36 ein, durch die der Schieber 27 unverlierbar gehaltert ist.

Zum Spannen des Anschlußteiles 9 an dem Aufnahmekörper 1 wird bei in einer zurückgezogenen unwirksamen Stellung stehenden Schiebern 27 der Paßzapfen 10 in die Paßbohrung 7 des Aufnahmekörpers 1 eingefügt, derart, daß die im Querschnitt rechteckigen Mitnehmer 13 in die Aussparungen 15 eingreifen. Anschließend wird die Summenschraube 29 angezogen, die die beiden Schieber 27 radial aufeinander zu bewegt. Dabei untergreifen die beiden Teilbereiche der schrägen Spannfläche 32 die schräge Keil- oder Kegelmantelfläche 21 des Spannzapfens 18 in der aus Fig. 1 ersichtlichen Weise. Wegen dieser Schräglage der Flächen 21, 32 wird auf den Spannzapfen 18 über die Spannasen 31 und die Schieber 27 eine große axial wirkende Spannkraftkomponente übertragen, die bestrebt ist, den Paßzapfen 10 in die Paßbohrung 7 hineinzuziehen. Die radialen Spannkraftkomponenten der beiden einander genau 180° gegenüberliegenden Schieber 27 heben sich gegenseitig auf. Die Größe der auf den Spannzapfen 18 zur Wirkung kommenden Axialkomponente der Spannkraft hängt von der Wahl der Winkel 22, 33 ab; sie kann beliebig gewählt werden.

Der Spannzapfen 18 ist mit seinem zweiten zylindrischen Abschnitt 250 bei 37 (Fig. 1) an der Innenwand des zylindrischen Hohlraumes 25 längsverschieblich geführt.

Die Spannfläche 32 der Schieber 27 kann auch in mehr als zwei Spannflächenbereiche unterteilt sein, wie es auch denkbar ist, an jedem der Schieber 27 mehrere getrennte Spannasen 31 vorzusehen. Die Schieber 27 selbst sind bei dem beschriebenen Ausführungsbeispiel in Gestalt zylindrischer Bolzen ausgebildet; alternativ könnten sie auch eine eckige Querschnittsgestalt aufweisen. Denkbar wäre es auch in besonderen Fällen, an dem Spannzapfen 18 mehrere radial bewegliche Spannelemente angreifen zu lassen, die einander gegenüberliegend aber jeweils so angeordnet sein müssen, daß sich keine einseitige, an dem Spannzapfen 18 angreifende radiale spannkraftkomponente ergibt.

Bei abgeschraubtem Spannzapfen 18 kann das Anschlußteil 9 in einem mit einer der Gewindebohrung 4 entsprechenden Längsbohrung ausgestatteten Aufnahmekörper 1 auch mittels der herkömmlichen zentralen Spannschraube gespannt werden, womit der Aufnahmekörper 9 universell einsetzbar ist. Die axialen Spannkräfte gewährleisten in jedem Falle eine spielfreie gegenseitige Anlage der Anlageflächen 8,11 und eine radiale Zentrierung des Anschlußteils 9 bezüglich des Aufnahmekörpers 1 über den als Zentrierzapfen wirkenden Paßzapfen 10.

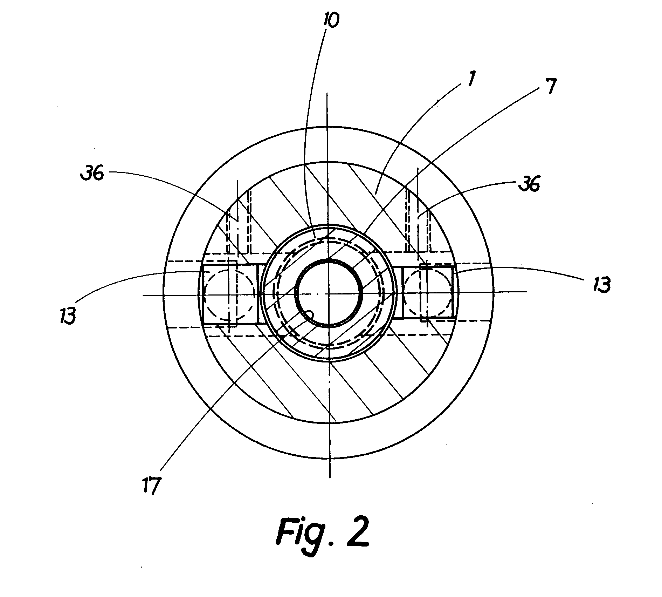

Die Ausführungsform nach Fig. 6 ist ähnlich jener nach den Fig. 1 bis 5 ausgebildet. Gleiche oder entsprechende Teile sind deshalb mit gleichen Bezugszeichen versehen, wobei sich eine nochmalige Erläuterung insoweit erübrigt.

Abweichend von der Ausführungsform nach den Fig. 1 bis 5 ist der Paßzapfen 10a selbst unmittelbar als Spannzapfen ausgebildet, so daß ein auf die Stirnfläche 16 des Paßzapfens 10a aufgesetzter pilzförmiger Spannzapfen 18 entfällt. Zu diesem Zwecke ist der kegelstumpfförmige Paßzapfen 10a im Bereiche der Paßbohrung 7 mit einer ringsumlaufenden Nut 210 versehen, deren Boden 211 in einer rechtwinklig zu der Drehachse 2 sich erstreckenden Ebene liegt und die auf der gegenüberliegenden Seite einseitig durch die Kegelmantelfläche 21 begrenzt ist. Die Nut 210 weist eine solche Höhe in Achsrichtung sowie eine solche Tiefe auf, daß bei dem in Fig.6 veranschaulichten Spannzustand die in die Nut 210 eingreifenden Spannasen 31 der beiden zylindrischen Schieber 27,von anderen Nutenwandungsteilen unbehindert,lediglich mit ihren Spannflächen 32 an der Kegelmantelfläche 21 angreifen und die zur Verspannung erforderlichen Axialkräfte übertragen.

Der Hohlraum 25 ist in diesem Falle unmittelbar durch die Paßbohrung 7 gebildet. Die Spannasen 31 sind bei 34 derart ausgebildet, daß sie den durch den Paßzapfen 10a gebildeten "Spannzapfen" im Bereiche der Wurzel der Nut 210 jeweils über fast 180° umgreifen.

## Patentansprüche

1. Mehrteiliges Spannsystem, insbesondere für rundlaufende Werkzeuge, mit einem gegebenenfalls einen Spannschaft tragenden Aufnahmekörper (1), der an einer Stirnseite eine rechtwinklig zu der Drehachse (2) verlaufende Anlagefläche (8) und eine koaxiale Paßbohrung (7) aufweist, sowie mit einem vorzugsweise als Werkzeugträger ausgebildeten Anschlußteil (9), das auf einer Stirnseite ebenfalls mit einer rechtwinklig zu der Drehachse verlaufenden Anlagefläche (11) und mit einem koaxialen, in die Paßbohrung passenden Paßzapfen (10) ausgebildet ist, durch den das Anschlußteil bezüglich des Aufnahmekörpers zentrierbar ist, mit einem dem Paßzapfen zugeordneten, zur Drehachse koaxialen Spannzapfen (18), der in einen sich an die Paßbohrung anschließenden Hohlraum des Aufnahmekörpers ragt sowie mit von der Außenseite des Aufnahmekörpers her betätigbaren Spannmitteln zur gegenseitigen Verspannung des Anschlußteiles und des Aufnahmekörpers, die wenigstens zwei in der den Hohlraum umschließenden Wandung des Aufnahmekörpers radial beweglich gelagerte Spannelemente (27) aufweisen, welche einander gegenüberliegend angeordnet sind und in einer Spannstellung schräg zu der Drehachse verlaufende Keilflächenbereiche (21) des Spannzapfens untergreifende Spannflächen tragen und mit ihnen gemeinsamen Betätigungsmitteln gekuppelt sind, durch die sie zwischen einer unwirksamen Lösestellung und der Spannstellung verstellbar sind, wobei die Keilflächenbereiche (21) des Spannzapfens (18; 10a) auf einer einzigen gemeinsamen, zur Drehachse (2) koaxialen Kegelmantelfläche liegen, die mit der Drehachse (2) einen spitzen Winkel (22) einschließt, dadurch gekennzeichnet, daß der Paßzapfen (10) und die Paßbohrung (8) kegelig ausgebildet sind und daß der in den Hohlraum (25) ragende Spannzapfen (18) in dem Aufnahmekörper (1) in einem unterhalb der Kegelmantelfläche (21) liegenden Abschnitt (250) zur Aufnahme etwaiger radialer Spannkraftkomponenten seitlich geführt ist.

2. Spannsystem nach Anspruch 1, dadurch gekennzeichnet, daß der Spannzapfen (18) an dem Paßzapfen (10) stirnseitig einstückig angeformt ist.

3. Spannsystem nach Anspruch 1, dadurch gekennzeichnet, daß der Spannzapfen (18) auf den Paßzapfen (10) stirnseitig aufgeschraubt ist.

4. Spannsystem nach Anspruch 1, dadurch gekennzeichnet, daß der Spannzapfen (18) durch den Paßzapfen (10a) gebildet ist, der eine von der Kegelmantelfläche (21) einseitig begrenzte, ringsumlaufende Nut (210) aufweist, die von der Kegelmantelfläche (21) einseitig begrenzt ist.

5. Spannsystem nach Anspruch 2 oder 3, dadurch gekennzeichnet, daß der Spannzapfen (18) pilzförmig ausgebildet ist.

6. Spannsystem nach Anspruch 1, dadurch gekennzeichnet, daß der Aufnahmekörper (1) eine koaxiale Bohrung (4) zur Aufnahme einer zentralen Spannschraube aufweist.

7. Spannsystem nach einem der vorhergehenden Ansprüche, dadurch gekennzeichnet, daß die Spannelemente durch in entsprechenden Führungen (26) der Wandung des Aufnahmekörpers (1) radial verschieblich gelagerte Schieber (27) gebildet sind.

8. Spannsystem nach Anspruch 7, dadurch gekennzeichnet, daß jeder Schieber (27) stirnseitig wenigstens eine die Spannfläche (32) tragende vorspringende Spannnase (31) aufweist.

9. Spannsystem nach Anspruch 8, dadurch gekennzeichnet, daß die Spannase (31) im Bereiche ihrer Stirnseite (34)der Umrißgestalt des Spannzapfens (18; 10a) entsprechend geformt ist.

10. Spannsystem nach einem der Ansprüche 7 bis 9, dadurch gekennzeichnet, daß die Betätigungsmittel eine mit entsprechenden Gewindebohrungen (28) der diametral einander gegenüberliegenden Schieber (27) zusammenwirkende Summenschraube (29) aufweisen, die von außen zugängliche Betätigungseinrichtungen (30) trägt und die oberhalb des Spannzapfens (18; 10a) verlaufend angeordnet ist.

## Claims

1. Multi-component chucking system, in particular for rotary tools, having a receiving body (1) optionally supporting a clamping shank, said receiving body (1) having an engagement surface (8) on one end face extending at right angles to the axis of rotation (2) and a coaxial retention bore (7); also having a tool element (9), preferably in the form of a tool holder, which is also provided on one end face with an engagement surface (11) extending at right angles to the axis of rotation and with a coaxial retention stub (10) fitting into said retention bore for centring said tool element relative to said receiving body; having a chucking pin (18) associated with said retention stub and coaxial to the axis of rotation, which projects into a hollow space of said receiving body adjoining said retention bore and also having chucking means, which may be actuated from the outside of the receiving body to allow the tool element and the receiving body to be clamped together, which have at least two locking elements (27) supported to be radially movable in the receiving body walls enclosing said receiving body, said locking elements being arranged opposite one another and being provided with locking surfaces by which, in a locking position, wedge-like surface regions (21) of said chucking pin which are inclined with respect to the axis of rotation are engaged from below, said locking elements being coupled with actuating means common to them and by means of which they may be adjusted between an ineffective release position and said locking position, said wedge-like surface regions (21) of said chucking pin (18; 10a) being located on a single common conical surface which is coaxial to the axis of rotation (2) and forms an acute angle (22) with said axis of rotation (2), characterised in that said retention stub (10) and said retention bore (8) are cone-shaped, and that said chucking pin (18) projecting into said hollow space (25) is guided laterally in said receiving body (1) in a section (20) located below said conical surface (21) to absorb any radial clamping force components.

2. Chucking system according to Claim 1, characterised in that the chucking pin (18) is integrally formed onto the end face of the retention stub (10).

3. Chucking system according to Claim 1, characterised in that the chucking pin (18) is screwed onto the end face of the retention stub (10).

4. Chucking system according to Claim 1, characterised in that the chucking pin (18) is formed by the retention stub (10a), which has an annularly encompassing groove (210) defined on one side by the conical surface region (21).

5. Chucking system according to Claim 2 or 3, characterised in that the chucking pin (18) is mushroom-shaped.

6. Chucking system according to Claim 1, characterised in that the receiving body (1) has a coaxial bore (4) to accommodate a central clamping screw.

7. Chucking system according to one of the previous claims, characterised in that the locking elements are formed by a slide (27) supported to be radially movable in corresponding guide bores (26) in the walls of the receiving body (1).

8. Chucking system according to Claim 7, characterised in that each slide (27) has on its end face at least one protruding chucking projection (31) supporting the locking surface (32).

9. Chucking system according to Claim 8, characterised in that the chucking projection (31) is appropriately formed in the region of its end face (34) to match the outline of the chucking pin (18; 10a).

10. Chucking system according to one of Claims 7 to 9, characterised in that the actuating means have a turnbuckle-type screw bolt (29) cooperating with corresponding threaded bores (28) of the diametrically opposed slides (27), said screw bolt (29) having actuating means (30) accessible from the outside and being arranged to extend above the chucking pin (18; 10a).

## Revendications

1. Système de serrage en plusieurs parties, en particulier pour des outils entraînés en rotation, comprenant : un corps de réception (1) qui porte le cas échéant une queue de serrage et présente sur un côté frontal une surface d'appui (8) s'étendant perpendiculairement à l'axe de rotation (2) et un trou de centrage (7) coaxial ; une pièce de raccordement (9) qui est de préférence réalisée sous la forme d'un porte-outil et qui est munie, sur un côté frontal, également d'une surface d'appui (11) s'étendant perpendiculairement à l'axe de rotation, et d'un tenon de centrage (10) coaxial, qui s'ajuste dans le trou de centrage et par lequel la pièce de raccordement peut être centrée par rapport au corps de réception ; un tenon de serrage (18) coaxial à l'axe de rotation, associé au tenon de serrage et pénétrant dans une cavité ménagée dans le corps de réception à la suite du trou de centrage ; ainsi que des moyens de serrage pouvant d'être actionnés depuis le côté extérieur du corps de réception en vue du serrage réciproque de la pièce de raccordement et du corps de réception, et présentant au moins deux éléments de serrage (27) qui sont montés mobiles radialement dans la paroi du corps de réception, entourant la cavité, qui sont disposés en opposition l'un par rapport à l'autre, qui portent des surfaces de serrage qui s'engagent dans une position de serrage en dessous de zones de surface en coin (21) du tenon de serrage, s'étendant de façon oblique à l'axe de rotation, et qui sont couplés avec des moyens d'actionnement communs par lesquels ils peuvent être déplacés entre une position de libération inactive et la position de serrage, les zones de surfaces en coin (21) du tenon de serrage (18 ; 10a) étant situées sur une surface latérale de cône unique commune, coaxiale à l'axe de rotation (2), qui fait un angle aigu (22) avec l'axe de rotation (2), **caractérisé** par le fait que le tenon de centrage (10) et le trou de centrage (8) sont coniques et que le tenon de serrage (18) pénétrant dans la cavité (25) est guidé latéralement, en vue de la réception d'éventuelles composantes radiales de la force de serrage, dans le corps de réception (1) dans une section (250) située en dessous de la surface latérale de cône (21).

2. Système de serrage suivant la revendication 1, **caractérisé** par le fait que le tenon de serrage (18) est formé d'une seule pièce frontalement sur le tenon de centrage (10).

3. Système de serrage suivant la revendication 1, **caractérisé** par le fait que le tenon de serrage (18) est vissé frontalement sur le tenon de centrage (10).

4. Système de serrage suivant la revendication 1, **caractérisé** par le fait que le tenon de serrage (18) est formé par le tenon de centrage (10a) qui présente une gorge (210) circulaire, délimitée d'un côté par la surface latérale de cône (21).

5. Système de serrage suivant la revendication 2 ou 3, **caractérisé** par le fait que le tenon de serrage (18) est réalisé en forme de champignon.

6. Système de serrage suivant la revendication 1, **caractérisé** par le fait que le corps de réception (1) présente un trou coaxial (4) pour la réception d'une vis de serrage centrale.

7. Système de serrage suivant l'une des revendications précédentes, **caractérisé** par le fait que les éléments de serrage sont constitués par des coulisseaux (27) montés mobiles en translation radiale dans des glissières correspondants (26) de la paroi du corps de réception (1).

8. Système de serrage suivant la revendication 7, **caractérisé** par le fait que chaque coulisseau (27) présente frontalement au moins un nez de serrage (31) en saillie portant la surface de serrage (32).

9. Système de serrage suivant la revendication 8, **caractérisé** par le fait que le nez de serrage (31) est conformé, dans la zone de son côté frontal (34), en fonction du contour du tenon de serrage (18 ; 10a).

10. Système de serrage suivant l'une des revendications 7 à 9, **caractérisé** par le fait que les moyens d'actionnement comprennent une vis (29) à doubles filetages contraires, coopérant avec des trous taraudés (28) correspondant des coulisseaux (27) diamétralement opposés, cette vis portant des dispositifs d'actionnement (30) accessibles de l'extérieur et étant disposée de manière à s'étendre au-dessus du tenon de serrage (18 ; 10a).
